# EUROPÄISCHE PATENTSCHRIFT

(11) **EP 0 288 045 B1**
(45) Veröffentlichungstag und Bekanntmachung des Hinweises auf die Patenterteilung: **26.05.1993**
(21) Anmeldenummer: 88106350.7
(22) Anmeldetag: 21.04.1988
(51) Int. Cl.: F16K 31/68

(54) **Doppelventil mit zwei Ein- und Auslässen zum Mischen zweier verschieden temperierter Flüssigkeitströme**
Double valve with two entry and exhaust ports for the mixing of two different temperatured fluids
Soupape double avec deux arrivées et sorties pour mélanger deux fluides à température différente

(30) Priorität: 24.04.1987 AT 1011/87
(43) Veröffentlichungstag der Anmeldung: 26.10.1988
(73) Patentinhaber: Joh. Vaillant GmbH u. Co., 42810 Remscheid (DE); n.v. Vaillant s.a., 1620 Drogenbos (BE); VAILLANT S.A.R.L, 94537 Rungis Cedex (FR); VAILLANT Ges.m.b.H, 1233 Wien (AT); Vaillant Ltd., Rochester Kent ME2 4EZ (GB); Vaillant-Schonewelle B.V., 1100 DT Amsterdam (NL); Vaillant GmbH, 8953 Dietikon 1 (CH)
(72) Erfinder: Plate, Joachim, D-5632 Wermelskirchen 1 (DE)
(74) Vertreter: Heim, Johann-Ludwig, Dipl.-Ing.

(56) Entgegenhaltungen:
- DE-A- 1 932 552
- DE-C- 555 509
- DE-C- 1 088 771
- US-A- 2 465 458

## Beschreibung

Die vorliegende Erfindung bezieht sich auf ein Doppelventil gemäß dem Oberbegriff des unabhängigen Patentanspruchs. Weiterhin bezieht sich die Erfindung auf die Verwendung eines solchen Doppelventils in einer Umlaufheizung mit einem Heizkessel.

Ein Ventil gemäß dem Oberbegriff des unabhängigen Patentanspruchs 1 ist bekanntgeworden aus der DE-OS 1 932 552, bei dem allerdings der Dehnstoffkörper in zwei Elemente aufgesplittet ist, wobei das eine als sogenannter Fühler außerhalb des Ventilgehäuses dem einen Flüssigkeitsstrom ausgesetzt ist, während der andere Teil, ausbildet als Stellglied, außen am Gehäuse angeordnet auf die Ventilstange einwirkt, die den Ventilkörper trägt, der den beiden Sitzen des Ventils zugeordnet ist.

Somit handelt es sich bei diesem Doppelventil um ein mehrteiliges Element, das nicht nur einfach an die beiden bestehenden Ein- und Auslässe adaptiert wird.

Weiterhin ist ein zweites fühlerartiges Dehnstoffelement vorgesehen, das einem anderen Medium ausgesetzt ist.

Weitere von einem Dehnstoffkörper gesteuerte Ventile sind bekannt aus der EP-A-92 933, der DE-C-2 852 935, der DE-C-2 816 446, der WO-A-79 00 13 und der US-C-3 935 998.

Bei der sogenannten Brennersteuerung des Heizkessels einer Umlaufheizung wird auf den Einbau einer Mischvorrichtung verzichtet, die Rücklauf- und Vorlaufleitung des Heizsystems werden unmittelbar an den Heizkessel angeschlossen, und der Brenner wird bei Wärmeanforderung über den Kesselthermostaten beziehungsweise über die witterungsgeführte Vorlauftemperatur in Betrieb genommen.

Für Heizungsanlagen mit großem Wasserinhalt und nächtlicher Absenkung beziehungsweise Abschaltung kann es bei solchen Anlagen zu einer lang dauernden morgendlichen Schwitzwasserphase kommen. Diese Tendenz wird bei solchen Heizkesseln durch eine exakt bemessene Kesselleistung, die die Aufheizphase noch zusätzlich verlängert, verstärkt.

Das auf der Rauchgasseite des Heizkessels anfallende Kondensat kann die Korrosionsrate deutlich vergrößern.

Will man die Rücklauftemperatur des Heizkessels schnell anheben, muß das thermisch trägere, nachgeschaltete Heizsystem vom Heizkessel hydraulisch zeitweise getrennt werden. Diese Trennung kann durch den Einsatz von Drei- beziehungsweise Vierwegemischern erfolgen, doch ist diese Lösung mechanisch vergleichsweise aufwendig und deshalb kostspielig, weil sie einer komplizierten Koppelung der Elemente Mischer - Motor - Ansteuerungselektronik - Integration in die Regelung bedarf.

Außerdem öffnet bei Wärmeanforderung in der morgendlichen Kaltstartphase der konventionelle Drei- beziehungsweise Vierwegemischer, wodurch kühles Wasser aus dem Heizsystem ungehindert in den Heizkessel strömt. Die Dauer der Schwitzwasserphase ist also vergleichbar mit der bei Brennersteuerung.

Aufgabe der Erfindung ist eine weitgehende Vereinfachung des Mischsystems durch eine zielführende Gestaltung eines als Mischer verwendbaren Doppelventiles der eingangs bezeichneten Gattung.

Erfindungsgemäß wird bei einem solchen Doppelventil die Aufgabe durch die kennzeichnenden Merkmale des unabhängigen Patentanspruchs 1 gelöst.

Diese Verwendung eines solchen Doppelventiles bringt den Vorteil, daß man den Primärkreis des Heizkessels vom Sekundärkreis der Umlaufheizung nach Bedarf trennen kann. Außerdem kann dieses einfach gestaltete und selbsttätig funktionierende Doppelventil als Zubehör ohne aufwendige Vorarbeiten in eine bereits vorhandene Brennersteuerung eingefügt werden.

Die Soll-Rücklauf- beziehungsweise die Soll-Vorlauftemperatur, die erforderlich ist, um die Bildung von Schwitzwasser zu vermeiden, kann dabei durch eine zielführende Voreinstellung in einem bestimmten Bereich optimal variiert werden.

Der Ventilschaft des erfindungsgemäßen Doppelventiles ist zwischen einer Stellung, bei der ein Ventilkörper den Strömungsweg des einen Flüssigkeitsstromes sperrt, und einer Stellung, bei der der andere Ventilkörper den Strömungsweg des anderen Flüssigkeitsstromes sperrt, verstellbar.

Zahlreiche weitere Erfindungsmerkmale des Doppelventiles sind der besseren Verständlichkeit wegen nachstehend anhand der Zeichnungen erläutert.

Die Erfindung erstreckt sich ferner auf eine Umlaufheizung mit einem Heizkessel und einer diesem Heizkessel zugehörigen Vorlauf- und Rücklaufleitung sowie einem Heizungsvorlauf und -rücklauf und einem zwischen dem Heizungskreis und dem Kesselkreis angeordneten erfindungsgemäßen Doppelventil.

Erfindungsgemäß ist bei einer solchen Umlaufheizung der Dehnstoffkörper in einer Kammer des Doppelventil-Gehäuses angeordnet, in der der Heizungsrücklauf mündet und von der der Kesselrücklauf ausgeht und die mittels eines der beiden Ventilkörper gegen die Mündung des Kesselvorlaufes abschließbar ist.

Diese erste Ausführungsform ist Gegenstand der nachfolgenden Beschreibung und der Zeichnungen.

Nach einer in den Zeichnungen nicht dargestellten Variante verbindet eine Kammer, die den Dehnkörper aufnimmt, den Kesselvorlauf mit dem Heizungsvorlauf. Dadurch wird erreicht, daß das Heizungssystem erst bei einer Mindestvorlauftemperatur durchströmt werden kann. In dieser zweiten Ausführungsvariante verbindet eine Ventilkammer den Heizungsrücklauf über eine Umgehungsleitung mit dem Kesselrücklauf.

Weitere Erfindungsmerkmale einer solchen Umlaufheizung sind gleichfalls anhand der Zeichnungen nachstehend erläutert, und zwar zeigen diese Zeichnungen in
Figur 1 einen schematischen Schnitt durch das Doppelventil und
Figuren 2 bis 4 eine schematische Darstellung der verschiedenen Betriebsphasen.

Das Gehäuse 1 des dargestellten Doppelventiles umschließt eine Einheit, die aus den beiden koaxialen Ventilkörpern 2 und 3, dem diese Ventilkörper verbindenden Ventilschaft 4 und dem Dehnstoffkörper 5 besteht und sich an dem einen Ende mit diesem Dehnstoffkörper gegen ein Widerlager 6, am anderen Ende über eine in der Ventilkammer 18 angeordnete Druckfeder 7 gegen die einander gegenüberliegenden Stirnwände des Gehäuses 1 abstützt. Die Federkraft der Druckfeder 7 ist mittels einer Stellschraube 8 einstellbar.

In das Gehäuse 1 münden radial der Kesselvorlauf 9 und der Heizungsrücklauf 10. Ferner wird die Gehäusewandung vom Heizungsvorlauf 11 und vom Kesselrücklauf 12 durchsetzt.

Der Ventilschaft 4 mit seinen beiden Ventilkörpern 2 und 3 ist zwischen einer Stellung, bei der der Ventilkörper 2 mit dem Ventilsitz 13 den Strömungsweg 10 bis 11 des Heizungskreises sperrt, und einer Stellung, bei der Ventilkörper 3 den Strömungsweg 9 bis 12 des Kesselkreises sperrt, verstellbar.

Die beiden Ventilkörper 2 und 3, der sie verbindende Schaft 4 und der gegen das Gehäuse 1 abgestützte Dehnstoffkörper 5 bilden eine Einheit, die mit einer auf diese Einheit einwirkenden, gegen das Gehäuse 1 abgestützten Druckfeder 7 koaxial angeordnet ist.

Der Dehnstoffkörper 5 ist in einer Kammer 17 des Gehäuses 1 angeordnet, in die der Heizungsrücklauf 10 mündet und von der der Kesselrücklauf 12 ausgeht und die mittels des Ventilkörpers 3 gegen die Mündung des Kesselvorlaufes 9 abschließbar ist. Zum Ventilkörper 3 gehört der Ventilsitz 14.

Der Ventilsitz 13 des Ventilkörpers 2 befindet sich zwischen der Mündung des Kesselvorlaufes 9 und dem Auslaß des Heizungsvorlaufes 11. Der Kesselvorlauf 9 mündet in eine zwischen den Ventilsitzen 13 und 14 verlaufende Umgehungsleitung 15.

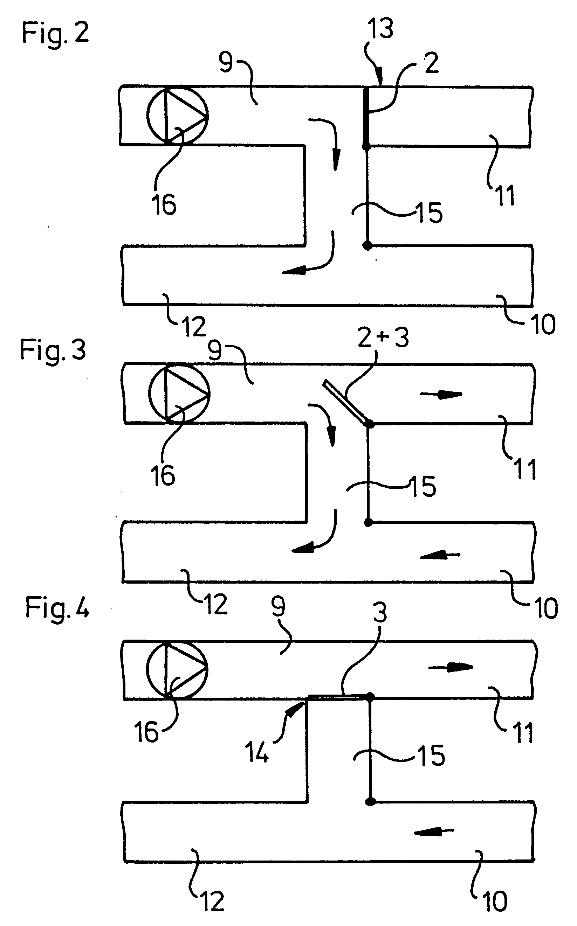

Die Pumpe 16 der Umlaufheizung ist - wie die Figuren 2 bis 4 zeigen - stromauf des Doppelventils angeordnet.

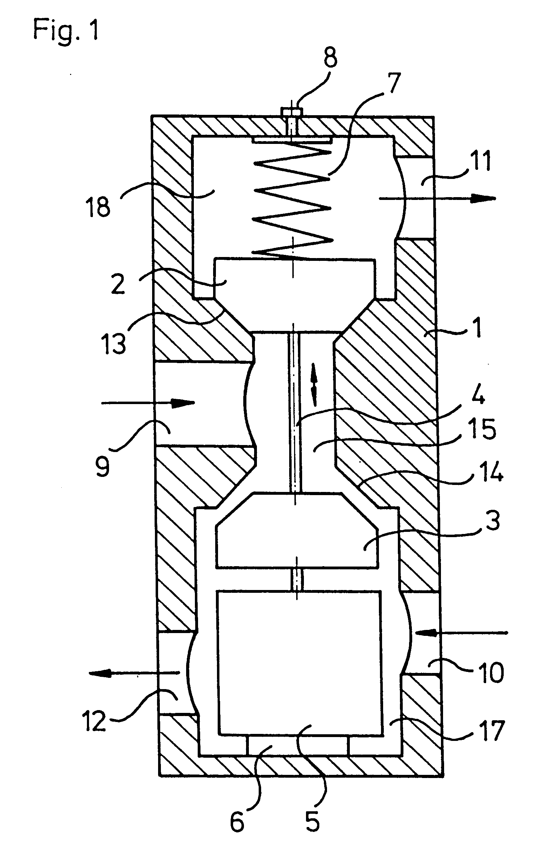

Der in Figur 1 dargestellten Stellung des Doppelventiles entspricht die Phase nach Figur 2: Der Ventilkörper 2 hält den Ventilsitz 13 verschlossen. Die Ist-Temperatur des Heizkesselrücklaufes 12 ist wesentlich geringer als der Soll-Wert, und der Dehnstoffkörper hält im geschrumpften Zustand des Ventils 3/14 offen. Das Wasser des Kesselvorlaufes 9 strömt demnach infolge der Tätigkeit der Pumpe 16 über die Umgehungsleitung 15 zurück in den Kesselkreis und wird vergleichsweise rasch auf die Soll-Temperatur aufgeheizt. Der Wasserdurchsatz im Heizungskreis ist gleich Null.

In der Stellung nach Figur 3 hält der Dehnstoffkörper 5 die beiden Ventile 2/13 und 3/14 teilgeöffnet, weil er bereits mit einer Ist-Temperatur beaufschlagt wird, die etwa gleich oder nur geringfügig kleiner als die Soll-Temperatur ist. Ein Teildurchsatz des Kesselvorlaufes 9 strömt noch über die Umgehungsleitung 15 in den Kesselrücklauf 12 und wird mit dem Heizungsrücklauf 10 vermischt. Der restliche Teil gelangt aber schon über den Heizungsvorlauf 11 in den Heizungskreis.

Gemäß Figur 4 schließlich schließt der Ventilkörper 3 den Ventilsitz 14, weil der Dehnstoffkörper 5 eine Ist-Temperatur erhält, die größer als die Soll-Temperatur ist. Das Wasser des Kesselvorlaufes 9 strömt zur Gänze in den Heizungsvorlauf 11, der Heizungsrücklauf 10 zur Gänze in den Kesselrücklauf 12. Der Wasser Durchsatz durch die Umgehungsleitung 15 ist gleich Null.

Somit bleibt der Kesselkreis 9 bis 12 so lange in sich geschlossen, bis das an den Heizungskreis 10, 11 abzugebende Wasser eine gewisse Soll-Temperatur erreicht hat. Erst dann wird der Heizungskreis in den Kesselkreis unmittelbar einbezogen. Die Aufheizung des umlaufenden Wassers wird dadurch wesentlich beschleunigt und die Anlaufzeit der Heizung nach einem Kaltstart wesentlich verringert.

## Patentansprüche

1. Doppelventil mit zwei Ein- und Auslässen (9,10,11,12) zum Mischen zweier verschieden temperierter Flüssigkeitsströme, insbesondere für eine Umlaufheizung, mit einem in einem der Flüssigkeitsströme angeordneten Dehnstoffkörper (5), wobei auf einem gemeinsamen Ventilschaft (4) die je einen Auslaß (11,12) beherrschenden beiden Ventilkörper (2,3) angeordnet sind, dadurch gekennzeichnet, daß der Dehnstoffkörper (5) auf dem Ventilschaft (4) vorgesehen ist, der in einer Kammer (17) des Gehäuses (1) angeordnet ist, in die ein Einlaß (10) und ein Auslaß (12) münden.

2. Doppelventil nach Anspruch 1, dadurch gekennzeichnet, daß der Ventilschaft (4) zwischen einer Stellung, bei der ein Ventilkörper (2) mit seinem Ventilsitz (13) den Strömungsweg (10, 11) des einen Flüssigkeitsstromes sperrt, und einer Stellung, bei der der andere Ventilkörper (3) mit seinem Ventilsitz (14) den Strömungsweg (9, 12) des anderen Flüssigkeitstromes sperrt, verstellbar ist.

3. Doppelventil nach Anspruch 1 oder 2, dadurch gekennzeichnet, daß die Ventilkörper (2, 3), der sie verbindene Schaft (4) und der gegen das Gehäuse (1) abgestützte Dehnstoffkörper (5) eine Einheit bilden und eine auf diese Einheit (2 bis 5) wirkende, gleichfalls gegen das Gehäuse (1) abgestützte Rückstellfeder (7) mit dieser Einheit koaxial angeordnet ist.

4. Doppelventil nach Anspruch 3, dadurch gekennzeichnet, daß die Federkraft der Rückstellfeder (7), zum Beispiel mittels einer Stellschraube (8), einstellbar ist.

5. Doppelventil nach Anspruch 3 oder 4, gekennzeichnet durch im Gehäuse (1) radial ausgebildete Einlaß- und Auslaßöffnugen (9, 10, 11, 12) für die verschieden temperierten Flüssigkeitsströme.

6. Verwendung des Doppelventils nach einem der Ansprüche 1 bis 5 in einer Umlaufheizung mit einem Heizkessel und diesem Heizkessel zugehorigen Vorlauf- und Rücklaufleitungen (9,12) sowie einem Heizungsvorlauf und -rücklauf (11,10), dadurch gekennzeichnet, daß der Dehnstoffkörper (5) dieses Doppelventiles in einer Kammer (17) des Ventilgehäuses (1) angeordnet ist, in die der Heizungsrücklauf (10) mündet und von der der Kesselrücklauf (12) ausgeht und die mittels eines (3) der beiden Ventilkörper (2, 3) gegen die Mündung des Kesselvorlaufes (9) abschließbar ist.

7. Verwendung des Doppelventils nach einem der Ansprüche 1 bis 5 in einer Umlaufheizung mit einem Heizkessel und diesem Heizkessel zugehörigen Vorlauf- und Rücklaufleitungen.

## Claims

1. A double valve comprising two inlets and outlets (9, 10, 11, 12) for mixing two liquid streams at different temperatures, particularly for use in a circulating heating system, comprising an expansion element (15'), which is disposed in one of the liquid streams, wherein the two valve members (2, 3) for controlling respective outlets (11, 12) are provided on a common valve stem (4), characterized in that the expansion element (5) is provided on the valve stem (4), which is disposed in a chamber (17), which is formed in the housing (1) and into which one inlet (10) and one outlet (12) open.

2. A double valve according to claim 1, characterized in that the valve stem (4) is adjustable between a position in which one valve member (2) and the associated valve seat (13) shut off the flow path (10, 11) of one liquid stream, and a position in which the other valve member (3) and the associated valve seat (14) shut off the flow path (9, 12) of the other liquid stream.

3. A double valve according to claim 1 or 2, characterized in that the valve member (2, 3),the stem (4) connecting them and the expansion element (5), which is supported against the housing (1), constitute a unit, and a return spring (7) acting on that unit (2 to 5) is coaxial to said unit and is also supported against the housing (1).

4. A double valve according to claim 3, characterized in that the spring force of the return spring (7) is adjustable, e.g., by means of an adjusting screw (8).

5. A double valve according to claim 3 or 4, characterized by radially extending inlet and outlet openings (9, 10, 11, 12), which are formed in the housing (1) and are provided for the liquid streams at different temperatures.

6. The use of the double valve according to any of claims 1 to 5 in a circulating heating comprising a heating boiler, flow and return lines (9, 12) associated with said heating boiler, and heating system flow lines and return lines (11, 10), characterized in that the expansion element (5) of said double valve is disposed in a chamber (17) which is formed in the valve housing (1) and into which the heating system flow line (10) opens and from which the boiler return line (12) extends and which is adapted to be shut off by one (3) of the two valve members (2, 3) from the mouth of the boiler flow line (9).

7. The use of the double valve according to any of claims 1 to 5 in a circulating heating system comprising a heating boiler and flow and return lines associated with said heating boiler.

## Revendications

1. Double valve avec deux entrées et sorties (9, 10, 11, 12), permettant de mélanger deux courants de liquide de température différente, notamment pour un système de chauffage à circulation, et comprenant un corps de dilatation (5), une tige commune (4) portant les deux obturateurs (2, 3) qui coopèrent chacun avec une sortie (11, 12), caractérisée par le fait que le corps de dilatation (5) est prévu sur la tige (4) et disposé dans une chambre (17) du corps de valve (1), comportant une entrée (10) et une sortie (12).

2. Double valve suivant la revendication 1, caractérisée par le fait que la tige (4) peut être mise dans une position où l'obturateur (2) est appliqué sur son siège (13) et coupe ainsi l'écoulement (10, 11) du courant de liquide, et une position où l'autre obturateur (3) est appliqué sur son siège (14) et coupe ainsi l'écoulement (9, 12) de l'autre courant de liquide.

3. Double valve suivant la revendication 1 ou 2, caractérisée par le fait que les obturateurs (2, 3), la tige (4) qui les relie ensemble et le corps de dilatation (5) s'appuyant contre le corps de valve (1), forment une unité et qu'un ressort de rappel (7) agissant sur cette unité (2 à 5) et s'appuyant également contre le corps de valve (1), est disposé coaxialement par rapport à cette unité.

4. Double valve suivant la revendication 3, caractérisée par le fait que la force du ressort de rappel (7) peut être réglée à l'aide d'une vis (8).

5. Double valve suivant la revendication 3 ou 4, caractérisée par des orifices d'entrée et de sortie (9, 10, 11, 12) disposés radialement dans le corps de valve (1) pour les courants de liquide de température différente.

6. Utilisation de la double valve suivant l'une des revendications 1 à 5 dans un système de chauffage à circulation comprenant une chaudière et des tuyaux de départ et de retour (9, 12) respectifs ainsi que des tuyaux de départ et de retour (11, 10) pour le chauffage, caractérisée par le fait que le corps de dilatation (5) de cette double valve est disposé dans une chambre (17) du corps de valve (1), où débouche le tuyau de retour (10) du système de chauffage et de laquelle part le tuyau de retour (12) de la chaudière, et qui peut être bouchée par l'un des deux obturateurs (2, 3) vis-à-vis du tuyau de départ (9) venant de la chaudière.

7. Utilisation de la double valve suivant l'une des revendications 1 à 5 dans un système de chauffage à circulation comprenant une chaudière et des tuyaux de départ et de retour respectifs.
